(19) Europäisches Patentamt
European Patent Office
Office européen des brevets

(11) Veröffentlichungsnummer : **0 129 227**
**B1**

(12) **EUROPÄISCHE PATENTSCHRIFT**

(45) Veröffentlichungstag der Patentschrift : **25.05.88**

(51) Int. Cl.[4] : **C 08 B 31/00**

(21) Anmeldenummer : **84106878.6**

(22) Anmeldetag : **15.06.84**

(54) **Flammfestes Stärkeprodukt, Verfahren zu seiner Herstellung und seine Verwendung.**

(30) Priorität : **18.06.83 DE 3321960**

(43) Veröffentlichungstag der Anmeldung : **27.12.84 Patentblatt 84/52**

(45) Bekanntmachung des Hinweises auf die Patenterteilung : **25.05.88 Patentblatt 88/21**

(84) Benannte Vertragsstaaten : **AT BE CH DE FR GB IT LI NL SE**

(56) Entgegenhaltungen :
**GB-A- 1 113 979**
**US-A- 2 857 377**

(73) Patentinhaber : **CPC INTERNATIONAL INC.**
**International Plaza P.O. Box 8000**
**Englewood Cliffs New Jersey 07632 (US)**

(72) Erfinder : **Lörcks, Jürgen**
**Mühlenstrasse 2**
**D-4242 Rees-Bienen (DE)**
Erfinder : **Obradovic, Peter**
**Mauritsiussiedlung 45**
**D-4190 Kleve-Rindern (DE)**
Erfinder : **Hochbahn, Peter, Dr.**
**Waalstrasse 21**
**D-4190 Kleve 1 (DE)**
Erfinder : **Feeser, Hermann**
**Aurikelstieg 38**
**D-2000 Norderstedt (DE)**

(74) Vertreter : **Patentanwälte Müller-Boré, Deufel, Schön, Hertel, Lewald, Otto**
**Postfach 26 02 47 Isartorplatz 6**
**D-8000 München 26 (DE)**

**EP 0 129 227 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue flammfeste Stärkeprodukte, ein Verfahren zu ihrer Herstellung und ihre Verwendung als Klebstoff und Bindemittel für die Papier- und Pappenherstellung und -verarbeitung, flammhemmende Baustoffe, Isoliermaterialien und Verbundwerkstoffe, Anstrichfarben, Schlichten und Beschichtungsmittel sowie als thermoplastische Werkstoffe.

Bekanntlich finden gegebenenfalls modifizierte Stärken (Stärkeprodukte) vielfältige technische Anwendung und werden insbesondere allein oder in Kombination mit synthetischen Polymeren als vergleichsweise preiswerte Füllstoffe, Verdickungs- und/oder Bindemittel und Klebstoffe in der Papier- und Pappenindustrie zur Masse- und Oberflächenleimung sowie zum Streichen und Verkleben von Papier und Pappe, bei der Herstellung von Verbundwerkstoffen und als Bindemittel in Anstrichfarben, Klebstoffen, Füll-, Spachtel- und Beschichtungsmassen eingesetzt, wobei den vielfältigen Anforderungen durch entsprechende Auswahl des Stärkeproduktes und/oder der Zusätze weitgehend Rechnung getragen werden kann.

Schwierigkeiten bereitet bei den bekannten Stärkeprodukten allerdings des öfteren eine ungenügende Viskositätsstabilität, Wasserfestigkeit und/oder Verträglichkeit mit synthetischen Polymeren, sowie insbesondere deren Mangel an thermoplastischen Eigenschaften und damit Heißsiegelbarkeit und ihre leichte Brennbarkeit.

Es hat nicht an Versuchen gefehlt, diesen Mängeln abzuhelfen, wobei diese Versuche insofern jedoch nur von recht bedingtem Erfolg waren, als insbesondere hinsichtlich der beiden zuletzt genannten Eigenschaften Verbesserungen nur in begrenztem Ausmaß, mit ziemlich hohem Aufwand und/oder nur in bezug auf eine oder wenige erwünschte anwendungstechnische Eigenschaft(en) erzielt werden konnten.

Dies gilt vor allem bezüglich der Verbesserung der Flammfestigkeit von Stärken, die nach dem Stand der Technik durch Versetzen und gegebenenfalls Umsetzen der Stärke mit Phosphaten zu erreichen versucht wurde, wodurch Stärkeprodukte erhalten werden können, die zwar selbst ausreichend flammfest sind, sich aber meist nicht dazu eignen, ihrerseits damit behandelte Materialien, z. B. damit geleimte oder beschichtete Papiere, Pappen oder Textilien und/oder damit versetzte Kunststoffe hinlänglich schwerentflammbar zu machen und bezüglich anderer verbesserungsbedürftiger Eigenschaften, insbesondere der Heißsiegelbarkeit, nicht befriedigen.

Der Erfindung lag daher die Aufgabe zugrunde, die Nachteile des Standes der Technik zu überwinden und insbesondere kostengünstig herstellbare neue Stärkeprodukte zur Verfügung zu stellen, die eine hohe Flammfestigkeit aufweisen und durch weitere erwünschte Eigenschaften, insbesondere hohe Viskositätsstabilität, Wasserfestigkeit, hohe Klebkraft auf den verschiedensten Substraten wie Papier, Kunststoffen, Gipskarton, Glas- und Mineralfasern, Metall und Kunststoffen, Hartschäumen und/oder Mineralplatten und Stein, und/oder sich dadurch auszuzeichnen, daß sie thermoplastisch sind und flexible, wasserabweisende, klar-transparente und heißsiegelbare flammfeste Filme liefern.

Diese Aufgabe wird erfindungsgemäß durch die flammfesten Stärkeprodukte nach dem Patentanspruch 1 gelöst, die durch Umsetzung verkleisterter Stärken mit Sulfamaten erhältlich sind.

Da Sulfamate an sich bekannte Flammschutzmittel sind, die beispielsweise zum Flammfestmachen von Textilien und Papier eingesetzt werden (US-PS' en 2 142 116, 2 212 152 und 2 452 054 und DE-PS 904 524), konnte zwar eine gewisse Verbesserung der Flammfestigkeit durch Einbringen von Sulfamaten auch bei Stärken erzielt werden, nicht aber konnte deren erfindungsgemäß erzieltes Ausmaß und insbesondere nicht erwartet werden, daß die durch Umsetzung von — gegebenenfalls in situ — verkleisterter Stärke mit Sulfamat(en) erhaltenen Stärkeprodukte der Erfindung außer ihrer überraschenden hohen Flammfestigkeit auch eine ausgezeichnete Viskositätsstabilität, gute Verträglichkeit mit synthetischen Polymeren, hervorragende Klebeeigenschaften und Wasserfestigkeit aufweisen sowie größtenteils sogar thermoplastisch und heißsiegelbar sein würden.

Erfindungsgemäß kommt eine Stärke oder chemisch oder physikalisch modifizierte Stärke infrage, die vorgelatinisiert worden sein kann oder in situ vorgelatinisiert wird.

Als Sulfamate kommen für die Zwecke der Erfindung zwar grundsätzlich alle Alkali- und Erdalkalisulfamate sowie Ammoniumsulfamat in Betracht, jedoch werden Anmoniumsulfamat und Erdalkalisulfamate, insbesondere Kalziumsulfamat, besonders bevorzugt, wobei mit Erdalkali-, vor allem Kalziumsulfamat hergestellte Sulfamatstärke bei deren Verwendung als bzw. in Papierleimungsmitteln Papiere liefern, die nicht zum Vergilben neigen.

Die Eigenschaften der erfindungsgemäßen Stärkeprodukte hängen von der zur Umsetzung eingesetzten Sulfamatmenge ab, die erfindungsgemäß in zweckmäßiger Weise in einem Bereich von 5 bis 35 und vorzugsweise 7,5 bis 30 und insbesondere 10 bis 25 Gew.-%, bezogen auf die Stärketrockensubstanz, gewählt wird.

Schon beim Zusatz von nur 5 Gew.-% Ammoniumsulfat erhält man Stärkeprodukte, die nicht nur schwer entflammbar bzw. selbstverlöschend sind, sondern in der Regel auch deutlich verbesserte Eigenschaften in bezug auf Filmtransparenz und -elastizität aufweisen.

Ab einem Sulfamatanteil von etwa 10 bis 25 Gew.-% sind die Stärkeprodukte der Erfindung gut heißsiegelbar. Ein mit einem Film aus einem derartigen Stärkeprodukt in einer 10 g/m$^2$ entsprechenden Menge ausgerüstetes Papier kann beispielsweise mit einem anderen Papier durch Erhitzen auf ca. 150 °C und leichtes Andrücken so fest verklebt werden, daß der Verbund nach dem Abkühlen nur durch Faserriß wieder getrennt werden kann. Erfindungsgemäße Stärkeprodukte mit mittleren bis höheren Sulfamatgehalten sind nicht nur flammfest, sondern können auch zum Flammfestausrüsten eingesetzt werden. Beispielsweise erhält man einen nicht brennbar ausgerüsteten Karton, wenn man einen Karton mit einem Gewicht von 250 g/m$^2$ beidseitig mit 10 g/m$^2$ eines erfindungsgemäßen Stärkeprodukts mit einem Sulfamatgehalt von 20 Gew.-% beschichtet.

Erfindungsgemäße Stärkeprodukte mit einem hohen Sulfamatanteil (erfahrungsgemäß ab etwa 30 bis 33 Gew.-%) sind thermoplastische Massen mit einer Erweichungstemperatur von etwa 120 °C, die beim Abkühlen zu harten, festen Körpern erstarren und sich beim stärkeren Erhitzen (Gasflamme) zersetzen (Karamellisierungsgeruch).

Die Stärkeprodukte der Erfindung sind chemische Verbindungen mit bisher nicht geklärter Struktur, wie sich u. a. daraus ergibt, daß sie sich in ihren chemischen und physikalischen Eigenschaften deutlich von entsprechenden physikalischen Mischungen aus Quellstärken und trockenen Sulfamaten oder nicht erhitzten Mischungen aus Stärke- und Sulfamatlösungen unterscheiden, und daß sich der Sulfamatanteil daraus nicht durch Extraktion abtrennen läßt.

Wie bereits erwähnt, umfassen die erfindungsgemäßen Stärkeprodukte nicht nur reine Sulfamatstärken, sondern auch solche Produkte, die außer Sulfamatstärke mindestens ein synthetisches Polymer einer Menge von zweckmäßig bis zu 80 Gew.-%, bezogen auf das Gesamtgewicht des fertigen Stärkeproduktes, insbesondere ein Vinylpolymerisat enthalten, wobei Produkte besonders bevorzugt sind, denen das (die) synthetische(n) Polymer(en) durch Polymerisation mindestens eines Vinylmonomeren-Vorpolymeren in situ, insbesondere in Gegenwart eines Sulfamatstärke-Schutzkolloids, einverleibt worden ist.

Die Stärkeprodukte der Erfindung lassen sich dadurch herstellen, daß man eine — gegebenenfalls chemisch und/oder physikalisch modifizierte — Stärke, die vorverkleistert ist, oder in situ verkleistert wird, mit 3 bis 40 Gew.-% mindestens eines Sulfamats, ausgewählt aus der Gruppe, die aus Alkali-Erdalkali- und Ammoniumsulfamaten besteht, bezogen auf Stärketrockensubstanz, in Gegenwart von mindestens etwa 30 Gew.-% Wasser, bezogen auf das Gesamtgewicht des Reaktionsgemischs, bei erhöhter Temperatur von etwa 40 bis 250 °C umsetzt.

Diese Arbeitsweise geht von folgenden Erkenntnissen aus :

Die Sulfamate reagieren — im Gegensatz zu anderen Stärkemodifizierungsmitteln — mit unverkleisterter Stärke praktisch nicht. Auch mit trockener Quellstärke (vorverkleisterter Stärke) findet praktisch keine Reaktion statt, und selbst Gemische aus wäßrigen Sulfamat- und Quellstärkelösungen reagieren in der Kälte nicht.

Bei wasserhaltigen Mischungen aus verkleisterter Stärke und Sulfamat genügt jedoch häufig schon eine Trocknung unter Wärmezufuhr, um eine Reaktion zu bewirken, die zu einem deutlichen Effekt bezüglich der erfindungsgemäß angestrebten und erreichten Eigenschaften des Umsetzungsproduktes führt. Die besten Ergebnisse erzielt man jedoch, wie gefunden wurde, indem die Verkleisterung der Stärke nach üblichen Methoden, z. B. in diskontinuierlichen oder kontinuierlichen Kochern, in Extrudern oder auf beheizten Walzen, und die Umsetzung der (in situ) verkleisterten Stärke mit Sulfamat(en) in einem Arbeitsgang durchgeführt wird. Dies ist ein weiteres Indiz dafür, daß bei der Bildung der erfindungsgemäßen Stärkeprodukte chemische Reaktionen zwischen der Stärke und dem Sulfamat, vermutlich eine Esterbildung, stattfinden, die bei dieser Ausführungsform des Verfahrens der Erfindung dadurch begünstigt werden, daß bei die Reaktion beschleunigenden erhöhten Temperaturen die Freilegung reaktionsfähiger Zentren der Stärke durch deren Verkleisterung in situ erfolgt.

Wie bereits erwähnt, ist für die Umsetzung der Stärke mit Sulfamat(en) die Anwesenheit von Wasser erforderlich, und zwar — empirisch — in einer Menge von mindestens etwa 30 Gew.-%, bezogen auf das Gesamtgewicht des Reaktionsgemisches.

Die günstigste Umsetzungstemperatur hängt natürlich von den Umständen des Einzelfalles ab und kann vom Fachmann in dem vorstehenden Bereich danach ohne weiteres zweckentsprechend unter Berücksichtigung der Grundsätze gewählt werden, daß höhere Temperaturen die Reaktion beschleunigen, aber zugleich die Gefahr von Folge- bzw. Nebenreaktionen (Zersetzung) vergrößern, und daß beim Einsatz unverkleisterter Stärken die Verkleisterungstemperatur zumindest zeitweilig überschritten werden muß.

Das bei der Umsetzung erhaltene Reaktionsgemisch kann häufig wie es ist verwendet oder durch Trocknung und/oder Einverleiben eines synthetischen Polymeren weiter aufgearbeitet werden. Als synthetische Polymere verwendet man vorzugsweise Vinylpolymere die aus einem oder mehreren Monomeren aus Vinylacetat, Vinylchlorid, Styrol, einem Ester von Maleinsäure, einem Ester von Acrylsäure oder einem Ester von Methacrylsäure bestehen.

Die Menge an synthetischen Polymeren, die der Sulfamatstärke einverleibt werden kann, ist im Prinzip beliebig hoch ; der vorstehend genannte Wert von 80 Gew.-%, bezogen auf Gesamttrockensubstanz, stellt daher keine starre Höchstgrenze, sondern einen Erfahrungswert dar, bei dem die vorteilhaften Eigenschaften der Sulfamatstärken in den Stärkeprodukten der Erfindung in der Regel noch deutlich zum Tragen kommen.

Zur Herstellung erfindungsgemäßer Stärkeprodukte mit einem Gehalt an synthetischen Polymeren kann man letztere der Sulfamatstärke zwar grundsätzlich nach beliebigen physikalischen und/oder chemischen Methoden einverleiben, z. B. fallweise auch durch trockenes Mischen, jedoch ist es zur Erzielung von Stärkeprodukten mit optimalen Eigenschaften erfahrungsgemäß am zweckmäßigsten, die Sulfamatstärke in, vorzugsweise wäßriger, Dispersion mit dem (den) Polymer(en) umzusetzen, und zwar insbesondere dadurch, daß man entsprechende Monomere und/oder Vorpolymere in einer wäßrigen kolloidalen Dispersion des Stärke/Sulfamat-Umsetzungsproduktes in situ polymerisiert.

Eine besonders einfache, zweckmäßige und daher bevorzugte Methode zur Herstellung erfindungsgemäßer Stärkeprodukte besteht darin, die Stärke auf beheizten Walzen, wie sie üblicherweise zur Herstellung von Quellstärken benutzt werden — gegebenenfalls unter Verkleisterung in situ —, mit dem (den) Sulfamat(en) umzusetzen und das Reaktionsgemisch gegebenenfalls zu trocknen.

Zweckmäßigerweise setzt man bei dieser Ausführungsform eine wäßrige Dispersion mit einem Gesamttrockensubstanzgehalt an Stärke und Sulfamat(en) von 30 bis 70, vorzugsweise 35 bis 60 und insbesondere 40 bis 55 Gew.-% ein.

Als Stärkeausgangsmaterial kommen für die Zwecke der Erfindung zwar beliebige unmodifizierte und modifizierte Stärken in Betracht, jedoch werden modifizierte, insbesondere abgebaute, acylierte, veretherte und/oder oxidierte Stärken bevorzugt.

Die Stärkeprodukte der Erfindung werden, wie bereits erwähnt, vorzugsweise als bzw. in Klebstoffe(en) und Bindemittel(n) für Papier, Pappe, Baustoffe, Isoliermaterialien, Verbundwerkstoffe, Farben, Schlichten, Beschichtungsmittel Kunststoffe, Textilien, Glas- und Mineralfasern Formkörper aus pulverförmigen oder granuliertem Material verwendet, und zeichnen sich außer durch ihre Flammfestigkeit meist auch dadurch aus, daß sie einerseits sehr gut kaltwasserlöslich sind und andererseits dennoch wasserabstoßende Verklebungen bzw. Beschichtungen liefern sowie in der Regel bei der Trocknung dadurch aus, daß sie einerseits sehr gut kaltwasserlöslich sind und andererseits dennoch wasserabstoßende Verklebungen bzw. Beschichtungen liefern sowie in der Regel beim Trocknen klare, transparente, knickfähige, elastische und/oder heißsiegelfähige Filme liefern.

Sie lassen sich außerdem meist zur Herstellung von flammhemmenden Hartschäumen und/oder als thermoplastische Massen verwenden.

Die Beispiele erläutern die Erfindung und deren Vorteile gegenüber dem Stand der Technik. Prozentangaben beziehen sich, wenn nicht ausdrücklich anders angegeben, stets auf das Gewicht.

## Beispiel 1

Eine 20-%ige Suspension einer säuremodifizierten (abgebauten) Stärke (mit einer Viskosität von 50 mPa · s in 5 %iger wäßriger Lösung, gemessen bei 50 °C mit einem Brookfield-Viskosimeter, Sp. 1, 20 Upm) in Wasser wird 25 % Ammoniumsulfamat, bezogen auf Stärketrockensubstanz, versetzt, worauf das Reaktionsgemisch umgesetzt wird, indem man es 25 min bei pH 4,5 auf 95 °C erhitzt.

Die dabei erhaltene Sulfamatstärkelösung bildet beim Eintrocknenlassen nicht brennbare, wasserabstoßende, flexible, transparente Filme.

## Beispiel 2

400 Gew.-Teile einer oxidierten Stärke — Viskosität von 10 %iger wäßriger Lösung 50 mPa · s bei 60 °C (Brookfield Viskosimeter, Sp. 1, 20 Upm) — werden zusammen mit 80 Gew.-Teilen Ammoniumsulfamat in 480 Gew.-Teilen Wasser aufgeschlämmt. Diese Aufschlämmung wird mittels eines Walzentrockners bei einem Dampfdruck von 9 bar verkleistert und getrocknet.

Das dabei erhaltene flockenförmige Produkt läßt sich leicht in Wasser von Raumtemperatur auflösen. Beim Trocknen bildet sich aus einer solchen Lösung ein nicht brennbarer, hochflexibler, wasserabweisender, klar transparenter und heißsiegelfähiger Film.

Ein aus 20 Gew.-Teilen des beschriebenen Produkts durch Lösen in 800 Gew.-Teilen Wasser hergestellter Klebstoff besitzt eine ausnehmend hohe Viskositätsstabilität und ermöglicht eine sehr gute, flammhemmende Verklebung verschiedener Materialien, wie z. B. Papier/Karton mit Papier/Karton, Papier/Karton mit Alufolien, mit Mineral- und/oder Glasfasern, Hartschäumen aus Polystyrol, Phenolharzen oder Polyurethan, Holz, Kunststoffen, Gipskarton, mineralischen Stoffen und Steinen.

Diese Lösung ist darüber hinaus auch für das Schlichten von Textil- und Glasfasergarnen, das Ausrüsten daraus hergestellter Gewebe, als Zusatz in Formulierungen für Schutzanstriche, zur Ausrüstung von Verpackungsmaterial aus Papier, Karton oder Holz verwendbar. So behandeltes Material ist schwer bis nicht brennbar, wasserabstoßend und heißsiegelfähig.

## Beispiel 3

In 100 Gew.-Teile einer handelsüblichen Polyvinylacetat-Dispersion werden 100 Gew.-Teile einer 30 %igen Sulfamatstärkelösung, hergestellt nach Beispiel 1, eingerührt. Der so hergestellte Klebstoff ist für vielerlei Verbunde (s. Beispiel 2) geeignet, bindet sehr schnell ab und erzeugt nicht brennbare, wasserfeste und heißsiegelfähige Verklebungen.

## Beispiel 4

In eine nach Beispiel 1 hergestellte Stärkesulfamatlösung mit einem Feststoffgehalt von 15,4 % werden nach Zugabe eines üblichen Starters 37,7 Gew.-% Vinylacetat-Monomer bei 70 °C während 2 1/2 h gleichmäßig zudosiert und polymerisiert.

Die so hergestellte PVAc-Dispersion hat folgende Kenndaten :

| | |
|---|---|
| Feststoffgehalt : | ca. 52,5 % |
| Viskosität (Brookfield Sp. 3) | |
| 10 Upm : | 2.300 mPa · s |
| 20 Upm : | 1.670 mPa · s |
| 50 Upm : | 1.080 mPa · s |
| 100 Upm : | 800 mPa · s |

Filmeigenschaften : transparent, wasserfest, nicht brennbar, heißsiegelfähig

Beispiel 5

Ein Papier, das mit einer Sulfamatstärkelösung getränkt, beschichtet oder z. B. in einer Leimpresse behandelt wird, erfährt nicht nur eine Verbesserung bezüglich der technologischen Werte wie Festigkeit etc. sondern wird darüber hinaus nicht brennbar und wasserabweisend in einem Arbeitsgang.

Beispiel 6

Dieses Beispiel erläutert die Verwendung erfindungsgemäßer Stärkeprodukte zur Herstellung bzw. Behandlung von Papier.

a) Oberflächenleimung durch Auftrag mittels einer Leimpresse :

Eine Sulfamatstärke, hergestellt nach Beispiel 1 aus nativer Maisstärke und 20 % Ammoniumsulfamat, bezogen auf Stärke, wird in einer Konzentration von 8 % gelöst. Diese Lösung hat bei 50 °C eine Viskosität von 50 mPa · s (Brookfield, Spindel 1, 20 Upm). Die Lösung wird mittels einer Leimpresse in einem 3 % Stärkeprodukt (atro), bezogen auf Papiergewicht, entsprechenden Menge auf Papier aufgetragen.

Das dabei erhaltene, oberflächengeleimte Papier weist nicht nur verbesserte Festigkeit auf, sondern ist auch nicht brennbar und wasserabweisend.

b) Leimung druch Tränken von Papier :

Papier wird mit einer Sulfamatstärkelösung — hergestellt nach Beispiel 1 — die eine Konzentration von 20 % und bei 50 °C eine Viskosität von 25 mPa · s (Brookfield, Spindel 1, 20 Upm) hat, getränkt, so daß etwa 8 % Stärkeprodukt atro, bezogen auf Papiergewicht, vom Papier aufgenommen werden. Das so hergestellte Papier hat nicht nur höhere Festigkeitswerte, sondern ist zusätzlich flammfest gemäß DIN 4102 B 2.

c) Streichen von Papier :

Es wird eine Streichfarbe nach folgender Rezeptur hergestellt :

100 Gew.-Teile Kaolin
12 Gew.-Teile Latex
2,5 Gew.-Teile Sulfamatstärke (hergestellt nach Beispiel 2)
0,7 Gew.-Teile Ca-Stearat
0,3 Gew.-Teile opt. Aufheller

Feststoffgehalt der Streichfarbe : 60 bis 62 %.

Diese Streichfarbe weist hervorragende rheologische und Filmbildungseigenschaften auf und ergibt nicht brennbare und wasserabweisende gestrichene Papiere und Kartons mit ausgezeichneter Bedruckbarkeit.

**Patentansprüche**

1. Flammfestes Stärkeprodukt, erhältlich durch Umsetzung einer verkleisterten Stärke oder einer physikalisch und/oder chemisch modifizierten verkleisterten Stärke mit 3 bis 40 Gew.-%, bezogen auf Stärketrockensubstanz, eines oder mehrerer Sulfamate, ausgewählt aus der Gruppe, die aus Alkali-, Erdalkali- und Ammoniumsulfamaten besteht, bei Temperaturen von 40 bis 250 °C in Gegenwart von wenigstens 30 Gew.-% Wasser, bezogen auf das Gesamtgewicht des Reaktionsgemisches.

2. Stärkeprodukt nach Anspruch 1, dadurch gekennzeichnet, daß es erhältlich ist unter Einsatz einer in situ verkleisterten Stärke oder einer in situ verkleisterten physikalisch oder chemisch modifizierten Stärke.

3. Stärkeprodukt nach Anspruch 1 oder 2, dadurch gekennzeichnet, daß es ein Umsetzungsprodukt aus Stärke mit Kalzium- oder Ammoniumsulfamat ist.

4. Stärkeprodukt nach einem der vorhergehenden Ansprüche, dadurch gekennzeichnet, daß es, bezogen auf Stärketrockensubstanz, 5 bis 35, vorzugsweise 7,5 bis 30 und insbesondere 10 bis 25 Gew.-% Sulfamat(e) enthält.

5. Stärkeprodukt nach einem der vorhergehenden Ansprüche, dadurch gekennzeichnet, daß es durch Trocknen der Reaktionsmischung auf erhitzten Walzen erhältlich ist.

6. Stärkeprodukt nach Anspruch 5, dadurch gekennzeichnet, daß es erhältlich ist unter Einsatz einer Reaktionsmischung aus einer wäßrigen Dispersion mit einem Gesamttrockensubstanzgehalt an Stärke und Sulfamat von 30 bis 70, vorzugsweise 35 bis 60 und insbesondere 40 bis 55 Gew.-%.

7. Stärkeprodukt nach einem der vorhergehenden Ansprüche, dadurch gekennzeichnet, daß es erhältlich ist unter Einsatz einer chemisch modifizierten Stärke, bei der es sich um eine abgebaute, acylierte, veretherte und/oder oxidierte Stärke handelt.

8. Stärkeprodukt nach einem der vorhergehenden Ansprüche, dadurch gekennzeichnet, daß es, bezogen auf das Gesamtgewicht, bis zu 80 Gew.-% mindestens eines, vorzugsweise durch Polymerisation in situ erzeugten, synthetischen Polymeren, insbesondere eines Vinylpolymerisats, enthält.

9. Stärkeprodukt nach Anspruch 8, dadurch gekennzeichnet, daß das Vinylpolymere erhältlich ist durch Polymerisation wenigstens eines Vinylmonomeren in einer wäßrigen kolloidalen Dispersion des Reaktionsproduktes gemäß einem der Ansprüche 1 bis 7.

10. Stärkeprodukt nach Anspruch 9, dadurch gekennzeichnet, daß das Vinylmonomere aus einem oder mehreren Monomeren aus Vinylacetat, Vinylchlorid, Styrol, einem Ester von Maleinsäure, einem Ester von Acrylsäure oder einem Ester von Methacrylsäure besteht.

11. Verfahren zur Herstellung von flammfesten Stärkeprodukten gemäß einem der Ansprüche 1 bis 10, dadurch gekennzeichnet, daß man eine, gegebenenfalls chemisch und/oder physikalisch modifizierte Stärke, die vorverkleistert ist oder in situ verkleistert wird, bei Temperaturen von 40 bis 250 °C und in Gegenwart von mindestens 30 Gew.-% Wasser, bezogen auf das Gesamtgewicht des Reaktionsgemisches, mit 3 bis 40 Gew.-% mindestens eines Alkali-, Erdalkali- und/oder Ammoniumsulfamats, bezogen auf Stärketrockensubstanz, umsetzt und gegebenenfalls das Reaktionsgemisch trocknet und/oder ihm ein synthetisches Polymer, insbesondere ein Vinylpolymerisat, in einer Menge von bis zu 80 Gew.-%, bezogen auf Gesamttrockensubstanz, einverleibt, und zwar vorzugsweise durch Polymerisation mindestens eines Vinylmonomers, insbesondere Vinylacetat, -chlorid, Styrol und/oder mindestens eines Malein-, Acryl- und/oder Methacrylsäureesters in einer wäßrigen kolloidalen Dispersion des Stärke/Sulfamat-Umsetzungsproduktes.

12. Verfahren nach Anspruch 11, dadurch gekennzeichnet, daß man die Stärke auf beheizten Walzen gegebenenfalls verkleistert, mit dem Sulfamat umsetzt und das Reaktionsgemisch trocknet.

13. Verfahren nach Anspruch 12, dadurch gekennzeichnet, daß man eine wäßrige Dispersion mit einem Gesamttrokkensubstanzgehalt an Stärke und Sulfamat von 30 bis 70, vorzugsweise 35 bis 60 und insbesondere 40 bis 55 Gew.-% einsetzt.

14. Verfahren nach einem der Ansprüche 11 bis 13, dadurch gekennzeichnet, daß man, bezogen auf Stärketrockensubstanz, 5 bis 35, vorzugsweise 7,5 bis 30 und insbesondere 10 bis 25 Gew.-% Sulfamat(e) einsetzt.

15. Verfahren nach einem der Ansprüche 11 bis 14, dadurch gekennzeichnet, daß man als Sulfamat Kalzium- oder Ammoniumsulfamat einsetzt.

16. Verfahren nach einem der Ansprüche 11 bis 15, dadurch gekennzeichnet, daß man als Stärke eine modifizierte, vorzugsweise eine abgebaute, acylierte, veretherte und/oder oxidierte Stärke einsetzt.

17. Verwendung flammfester Stärkeprodukte nach einem der Ansprüche 1 bis 15 als bzw. in Klebstoffe(n) bzw. Bindemittel(n) für Papier, Pappe, Baustoffe, Isoliermaterialien, Verbundwerkstoffe, Farben, Schlichten, Beschichtungsmittel, Kunststoffe, Textilien, Glas -und Mineralfasern, Formkörper aus pulverförmigem oder granuliertem Material.

**Claims**

1. A flame-resistant starch product, obtainable by reacting a pasted starch or a physically and/or chemically modified pasted starch with from 3 to 40 % by weight, based on the starch solids content, of one or more sulphamates, selected from the group consisting of alkali metal, alkaline-earth metal and ammonium sulphamates, at temperatures of from 40 to 250 °C in the presence of at least 30 % by weight water, based on the total weight of the reaction mixture.

2. A starch product according to claim 1, characterized in that it may be obtained using a starch pasted in situ or a physically or chemically modified starch pasted in situ.

3. A starch product according to claim 1 or claim 2, characterized in that it is a product of reacting starch with calcium or ammonium sulphamate.

4. A starch product according to any one of the preceding claims, characterized in that it contains from 5 to 35, preferably 7.5 to 30 and especially 10 to 25 % by weight sulphamate(s) based on the starch solids content.

5. A starch product according to any one of the preceding claims, characterized in that it may be obtained by drying the reaction mixture on heated drums.

6. A starch product according to claim 5, characterized in that it may be obtained by using a reaction mixture of an aqueous dispersion with a total solids content of starch and sulphamate of from 30 to 70, preferably 35 to 60 and especially 40 to 55 % by weight.

7. A starch product according to any one of the preceding claims, characterized in that it may be obtained by using a chemically modified starch, which may be a decomposed, acylated, etherified and/or oxidised starch.

8. A starch product according to any one of the preceding claims, characterized in that it contains up to 80 % by weight, based on the total weight, of at least one synthetic polymer, preferably created by polymerisation in situ, especially a vinyl polymer.

9. A starch product according to claim 8, characterized in that the vinyl polymer may be obtained by polymerisation of at least one vinyl monomer in an aqueous, colloidal dispersion of the reaction product according to any one of claims 1 to 7.

10. A starch product according to claim 9, characterized in that the vinyl monomer consists of one or more monomers of vinyl acetate, vinyl chloride, styrene, an ester of maleic acid, an ester of acrylic acid or an ester of methacrylic acid.

11. A method for producing flame-resistant starch products according to any one of claims 1 to 10, characterized in that an optionally chemically and/or physically modified starch, which has been pre-pasted or is pasted in situ, is reacted at temperatures of from 40 to 250 °C in the presence of at least 30 % by weight water, based on the total weight of the reaction mixture, with from 3 to 40 % by weight of at least one alkali metal, alkaline earth metal and/or ammonium sulphamate, based on the starch solids content and in that optionally the reaction mixture is dried and/or has incorporated with it a synthetic polymer, especially a vinyl polymer, in an amount of up to 80 % by weight, based on the total solids content, and preferably by polymerisation of at least one vinyl monomer, especially vinyl acetate, vinyl chloride, styrene and/or at least one of a maleic, acrylic and/or methacrylic acid ester in an aqueous colloidal dispersion of the starch/sulphamate reaction product.

12. A method according to claim 11, characterized in that the starch is optionally pasted, reacted with the sulphamate and the reaction mixture is dried, all on heated drums.

13. A method according to claim 12, characterized in that an aqueous dispersion is used with a total solids content of starch and sulphamate of from 30 to 70, preferably 35 to 60 and especially 40 to 55 % by weight.

14. A method according to any one of claims 11 to 13, characterized in that from 5 to 35, preferably 7.5 to 30 and especially 10 to 25 % by weight of sulphamate(s), based on the starch solids content, is or are used.

15. A method according to any one of claims 11 to 14, characterized in that the sulphamate used is calcium or ammonium sulphamate.

16. A method according to any one of claims 11 to 15, characterized in that the starch used is a modified, preferably decomposed, acylated, etherified and/or oxidised starch.

17. The use of flame-resistant starch products according to any one of claims 1 to 15 as or in adhesives or binders for paper, cardboard, building materials, insulating materials, composite materials, paints, sizing agents, coating media, plastics, textiles, glass and mineral fibres and moulded bodies of powdery or granulated material.

**Revendications**

1. Produit amylacé ignifuge, pouvant être obtenu par réaction d'un amidon gélifié ou d'un amidon gélifié modifié physiquement et/ou chimiquement, avec 3 à 40 % en poids, par rapport à l'amidon sur base sèche, d'un ou plusieurs sulfamates choisis dans le groupe constitué de sulfamates alcalins, alcalino-terreux et d'ammonium, à des températures de 40 à 250 °C en présence d'au moins 30 % en poids d'eau, par rapport au poids total de mélange réactionnel.

2. Produit amylacé suivant la revendication 1, caractérisé en ce qu'il est obtenu en utilisant un amidon gélifié in situ ou un amidon gélifié in situ modifié physiquement ou chimiquement.

3. Produit amylacé suivant la revendication 1 ou 2, caractérisé en ce qu'il est un produit de réaction d'amidon avec le sulfamate de calcium ou d'ammonium.

4. Produit amylacé suivant l'une des revendications précédentes, caractérisé en ce qu'il contient, par rapport à l'amidon sur base sèche, 5 à 35, de préférence 5 à 30, et notamment 10 à 25 % en poids d'un ou plusieurs sulfamates.

5. Produit amylacé suivant l'une des revendications précédentes, caractérisé en ce qu'il est obtenu par séchage du mélange réactionnel sur des cylindres chauffés.

6. Produit amylacé suivant la revendication 5, caractérisé en ce qu'il est obtenu en utilisant un mélange réactionnel formé d'une dispersion aqueuse à teneur totale en amidon et sulfamate sur base sèche de 30 à 70, de préférence de 35 à 60 et notamment de 40 à 55 % en poids.

7. Produit amylacé suivant l'une des revendications précédentes, caractérisé en ce qu'il est obtenu en utilisant un amidon modifié chimiquement qui est un amidon dégradé, acylé, éthéré et/ou oxydé.

8. Produit amylacé suivant l'une des revendications précédentes, caractérisé en ce qu'il contient, par rapport au poids total, jusqu'à 80 % en poids d'au moins un polymère synthétique produit in situ, de préférence par polymérisation, notamment un polymérisat vinylique.

9. Produit amylacé suivant la revendication 8, caractérisé en ce que le polymère vinylique est obtenu par polymérisation d'au moins un monomère vinylique dans une dispersion aqueuse colloïdale du produit de réaction suivant l'une des revendications 1 à 7.

10. Produit amylacé suivant la revendication 9, caractérisé en ce que le monomère vinylique est constitué d'un ou plusieurs monomères consistant en acétate de vinyle, chlorure de vinyle, styrène, un ester d'acide maléique, un ester d'acide acrylique ou un ester d'acide méthacrylique.

11. Procédé d'obtention de produits amylacés ignifuges suivant l'une des revendications 1 à 10, caractérisé en ce qu'on fait réagir un amidon éventuellement modifié chimiquement et/ou physiquement, qui est prégélatinisé ou gélatinisé in situ, à des températures de 40 à 250 °C et en présence d'au moins 30 % en poids d'eau par rapport au poids total de mélange réactionnel, avec 3 à 40 % en poids d'au moins un sulfamate de métal alcalin, de métal alcalino-terreux et/ou d'ammonium, par rapport à l'amidon sur base sèche et, le cas échéant, on sèche le mélange réactionnel et/ou on y incorpore un polymère synthétique, notamment un polymère vinylique, en une quantité allant jusqu'à 80 % en poids par rapport à la matière sèche totale, à savoir de préférence par polymérisation d'au moins un monomère vinylique, notamment acétate de vinyle, chlorure de vinyle, styrène et/ou d'au moins un ester d'acide maléique, acrylique et/ou méthacrylique dans une dispersion aqueuse colloïdale du produit de réaction entre amidon et sulfamate.

12. Procédé suivant la revendication 11, caractérisé en ce qu'on gélifie éventuellement l'amidon sur des cylindres chauffés, on le fait réagir avec le sulfamate et on sèche le mélange réactionnel.

13. Procédé suivant la revendication 12, caractérisé en ce qu'on utilise une dispersion aqueuse ayant une teneur totale en amidon et sulfamate sur base sèche de 30 à 70, de préférence 35 à 60 et notamment 40 à 55 % en poids.

14. Procédé suivant l'une des revendications 11 à 13, caractérisé en ce qu'on utilise, par rapport à l'amidon sur base sèche, 5 à 35, de préférence 7,5 à 30 et notamment 10 à 25 % en poids d'un ou plusieurs sulfamates.

15. Procédé suivant l'une des revendications 11 à 14, caractérisé en ce qu'on utilise comme sulfamate le sulfamate de calcium ou d'ammonium.

16. Procédé suivant l'une des revendications 11 à 15, caractérisé en ce qu'on utilise comme amidon un amidon modifié, de préférence dégradé, acylé, éthéré et/ou oxydé.

17. Utilisation de produits amylacés ignifuges selon l'une des revendications 1 à 15, comme adhésif ou liant ou dans des adhésifs ou liants pour papiers, cartons, matériaux de construction, matériaux isolants, matériaux composites, peintures, enduits, compositions de revêtement, matières plastiques, textiles, fibres de verre et fibres minérales, pièces moulées en matière en poudre ou en granules.